# DEMANDE DE BREVET EUROPEEN

(11) **EP 1 818 741 A1**
(43) Date de publication de la demande: **15.08.2007**
(21) Numéro de dépôt: 07300762.7
(22) Date de dépôt: 01.02.2007
(51) Int. Cl.: G05B 9/03

(54) **Interface électronique pour une pédale de commande d'un véhicule automobile**

(30) Priorité: 14.02.2006 FR 0650521
(71) Demandeur: PEUGEOT CITROËN AUTOMOBILES S.A., 78140 Velizy Villacoublay (FR)
(72) Inventeur: KRAPF, Pascal, 78000, VERSAILLES (FR); PICQUART, François, 92170, VANVES (FR)
(74) Mandataire: Ménès, Catherine

(57) **Abrégé**

L'invention concerne une interface électronique (2) pour la transmission d'une information (1) impactant la sûreté de fonctionnement d'un véhicule automobile et possédant une valeur de repli, en particulier l'interface électronique associée à une pédale d'accélération dans un véhicule automobile. Selon l'invention, l'interface (2) est conformée pour recevoir au moins un signal électrique S dont l'amplitude est représentative de l'information (1), la perturbation du signal électrique S par la présence d'une résistance parasite sur la voie par laquelle transite le signal étant interprétée comme une variation de l'information (1) vers sa valeur de repli.

## Description

La présente invention concerne une interface électronique pour une pédale de commande de véhicule automobile.

La plupart des organes d'un véhicule automobile, et en particulier le moteur, sont pilotés par des calculateurs électroniques. Ainsi, un conducteur d'un véhicule automobile agit de moins en moins directement sur les organes du véhicule, mais exprime sa volonté que tel ou tel organe soit actionné ou que le moteur tourne à tel ou tel régime, en enfonçant une pédale de commande ou en actionnant des commandes manuelles. Citons à titre d'exemple la pédale d'accélérateur d'un véhicule automobile : le conducteur demande une augmentation du régime moteur en enfonçant la pédale d'accélérateur jusqu'à un degré correspondant. Citons comme exemple d'une commande manuelle un commutateur électrique permettant de choisir le mode de pilotage d'une boîte de vitesses mécanique pilotée, par exemple en mode confort ou en mode sportif.

En regardant plus particulièrement une pédale d'accélérateur, celle-ci est pourvue d'un capteur électronique qui transmet à un calculateur moteur une information électrique codant le pourcentage d'enfoncement de la pédale, également appelé ci-après le degré d'enfoncement de la pédale. L'interface électronique entre la pédale d'accélérateur et le calculateur moteur est conçue de façon partiellement redondante afin qu'aucune défaillance simple telle qu'un court-circuit, un circuit ouvert ou une résistance parasite sur l'une des voies par lesquelles les informations électriques arrivent, ne pourrait donner lieu à une interprétation erronée de la volonté du conducteur. En effet, on s'imagine facilement les conséquences d'une interprétation erronée, par le calculateur moteur, lorsque l'information électrique représente une pédale d'accélérateur à peine enfoncée alors que le calculateur moteur l'interprète comme une pédale entièrement enfoncée.

Parmi les différentes solutions déjà proposées pour améliorer l'interface électronique entre un organe de commande d'un véhicule automobile et un ordinateur de bord ou un calculateur moteur, le document DE-A-41 15 647 décrit un système de commande qui comprend, pour au moins une partie des organes du véhicule automobile, des capteurs en redondance, de sorte que, lorsque l'un des capteurs fournit un signal défaillant, le signal de l'autre capteur est exploité de manière pondérée. Ainsi, par exemple, lorsque l'un des deux capteurs d'une pédale d'accélérateur est défaillant, le signal venant de l'autre capteur ne produit pas une accélération correspondant à l'augmentation du degré d'enfoncement de la pédale, mais n'engendre qu'une accélération modérée. Par contre, lorsque le conducteur du véhicule lâche la pédale au moins un peu, le signal résultant de la réduction du degré d'enfoncement de la pédale d'accélérateur engendre une baisse correspondante du régime du moteur. D'autres conséquences d'un signal défaillant décrit dans le document DE-A-41 15 647 concernent une limitation de l'accélération du véhicule ou d'autres limitations, telles que celle du régime ou celle des rapports de vitesses accessibles. Encore une autre limitation proposée en cas de défaillance d'un des signaux reçus par l'interface électronique est la limitation de l'accélération en fonction du régime du moteur.

Selon une autre solution, selon laquelle les interfaces sont conformées pour recevoir deux signaux en tension, la pédale d'accélérateur envoie deux signaux de tension dont les rapports en amplitude sont par exemple de 1 à 2. Selon cet exemple numérique, la valeur de l'un des deux signaux est donc égale au double de la valeur de l'autre signal. Le calculateur moteur fait alors acquisition de ces deux signaux par un module d'interface de type pull-up et compare leurs valeurs respectives. Si les interprétations des signaux diffèrent d'un certain pourcentage, l'information électrique est considérée comme défaillante et le calculateur moteur entre dans un mode dégradé. De plus, des courts-circuits éventuels entre l'une des voies et la masse ou l'alimentation de l'interface sont détectées par la présence de zones de diagnostic, par exemple en dessous de 0,2 Volts et au-dessus de 4,8 Volts lorsque la tension d'alimentation est de 5 Volts.

La prise en compte de toute sorte de défaillances simples susceptibles d'intervenir à l'interface électronique, et aux connecteurs en particulier, permet d'assurer une bonne sûreté de fonctionnement si l'on suppose que les différentes défaillances possibles sont décorrelées et ne surviennent pas simultanément. Or, cette hypothèse n'est pas toujours justifiée, car différentes voies d'un même connecteur peuvent subir le même type de dégradations. Par exemple, dans le cas d'une dégradation des contacts par fretting mécanique, c'est-à-dire par une usure du revêtement au point de contact due à des vibrations auxquelles le connecteur est exposé, ou par fritting-corrosion, c'est-à-dire par une sollicitation vibratoire associée à la formation d'oxyde, plusieurs voies d'un même connecteur peuvent présenter des résistances parasites. Les interfaces électroniques actuelles avec leurs différentes solutions de détecter des défaillances, ne permettent alors pas de garantir que le degré d'enfoncement d'une pédale, et par cela la volonté du conducteur d'obtenir l'actionnement d'un certain organe du véhicule ou un régime particulier du moteur, ne soit pas interprété de façon erronée comme ayant une valeur supérieure à la valeur réelle. Ainsi, les défaillances souvent rencontrées, issues de résistances parasites simultanées sur une des voies de signal et sur la masse, ou sur les deux voies de signal, peut entraîner la détection par le calculateur moteur d'un enfoncement de la pédale d'accélérateur alors que celle-ci est au repos. Leur conséquence est facile à imaginer : une telle mauvaise interprétation peut affecter la sécurité en provoquant une accélération intempestive du véhicule.

D'autre part, l'introduction de nouvelles fonctions commandées comme par exemple le desserrage automatique du frein de stationnement au moment du démarrage du véhicule, nécessite de renforcer les exigences de sûreté de fonctionnement sur le signal issu d'une pédale de commande, notamment de la pédale d'accélérateur.

Le but de l'invention est de remédier aux inconvénients décrits ci avant.

Plus particulièrement, l'invention doit permettre d'améliorer la sécurité de fonctionnement d'un véhicule automobile tout en prenant en compte la possibilité de la présence de résistances parasites simultanément sur plusieurs voies de signaux.

Le but de l'invention est atteint avec une interface électronique pour la transmission d'une information impactant la sûreté de fonctionnement d'un véhicule automobile et possédant une valeur de repli, cette interface étant conformée pour recevoir au moins un signal électrique dont l'amplitude est représentative de ladite information et pour que la perturbation du signal électrique par la présence d'une résistance parasite sur la voie par laquelle transite le signal soit interprétée comme une variation de l'information vers sa valeur de repli.

Dans une variante plus particulièrement préférée, l'information transmise correspond au degré d'enfoncement d'une pédale de commande et la valeur de repli est la position non enfoncée de la pédale. Autrement dit, la perturbation du signal n'est jamais interprétée comme une demande d'accélération du véhicule mais au contraire, comme une demande de ralentissement.

Les dispositions de l'interface électronique de l'invention concernent en fait deux aspects différents. L'interface utilise à cet effet un circuit pull-up comme dans des interfaces déjà utilisées avant l'invention.

Le premier aspect de l'amélioration de l'interface électronique concerne l'interprétation proprement dite des informations électroniques reçues des capteurs associés à une pédale de commande, par exemple à la pédale d'accélérateur d'un véhicule automobile. Rappelons dans ce contexte que les interfaces utilisées avant l'invention interprétaient une augmentation de l'amplitude des signaux formant l'information électronique, comme la volonté du conducteur d'augmenter le régime du moteur. L'interface de l'invention utilise une interprétation inverse, c'est-à-dire une augmentation de la tension des signaux est interprétée comme la volonté du conducteur de diminuer le régime moteur. Ce renversement de l'interprétation de l'information électronique apporte l'avantage que les conséquences de la présence d'une résistance parasite sur une des voies de signaux ou sur la masse sont moins néfastes que dans les systèmes précédents ou n'ont pas de conséquences du tout. En effet, avec un montage pull-up, la présence d'une résistance parasite entraîne une augmentation de la tension du signal vue par le calculateur. L'augmentation de la tension étant interprétée comme une diminution voulue du régime du moteur, la résistance parasite n'entraîne pas de problème de sécurité car le degré d'enfoncement de la pédale interprété est inférieur à l'enfoncement réel de la pédale. Ceci reste même vrai lorsque le défaut n'est pas ou ne peut pas être détecté par les contrôles de cohérence entre les signaux redondants.

Selon une variante plus particulièrement préférée de l'invention, il est de plus prévu des moyens pour une relecture de la tension d'alimentation de l'interface et comparaison de cette relecture avec la tension d'alimentation pour pouvoir détecter une information électrique défaillante aussi lorsqu'elle a pour origine un problème de tension d'alimentation.

En effet, le renversement de l'interprétation de l'information électrique ne permet pas à elle seule de s'affranchir du cas où des résistances parasites sont présentes simultanément sur l'alimentation et sur l'une au moins des voies de signal. Afin de traiter ce cas, l'interface électronique de l'invention comprend des moyens permettant une relecture de la valeur de la tension d'alimentation vue par la pédale de commande. Si cette relecture s'écarte de la valeur de la tension imposée par le régulateur de tension du calculateur, cela signifie qu'il y a présence d'une résistance parasite sur cette alimentation. La stratégie de secours appliquée par le calculateur consiste alors à passer en mode dégradé avec inhibition de certaines fonctions critiques ou à recalculer le degré d'enfoncement de la pédale interprété par l'interface, en effectuant une correction avec la valeur d'alimentation relue.

L'amélioration de l'interface électronique sous les deux aspects présentés ci-avant permet de garantir que, quelle que soit la combinaison de résistances parasites présente sur les différentes voies électriques liant la pédale de commande à l'ordinateur de bord ou au calculateur moteur, le degré d'enfoncement de la pédale vu par le calculateur ne sera jamais supérieur à la valeur réelle.

D'autres caractéristiques et avantages de la présente invention ressortiront de la description ci-après d'un mode de réalisation de l'invention. La description est faite en référence aux dessins dans lesquels :

La figure 1 rappelle la structure d'une interface utilisée avant l'invention,

la figure 2 représente la correspondance entre la valeur de l'information électronique engendrée par deux capteurs redondants d'une pédale de commande et le degré d'enfoncement de cette pédale dans une interface selon la figure 1,

la figure 3 représente la correspondance entre la valeur de l'information électronique engendrée par deux capteurs redondants d'une pédale de commande et le degré d'enfoncement de la pédale dans une interface selon l'invention et

la figure 4 représente la conception d'une interface selon l'invention.

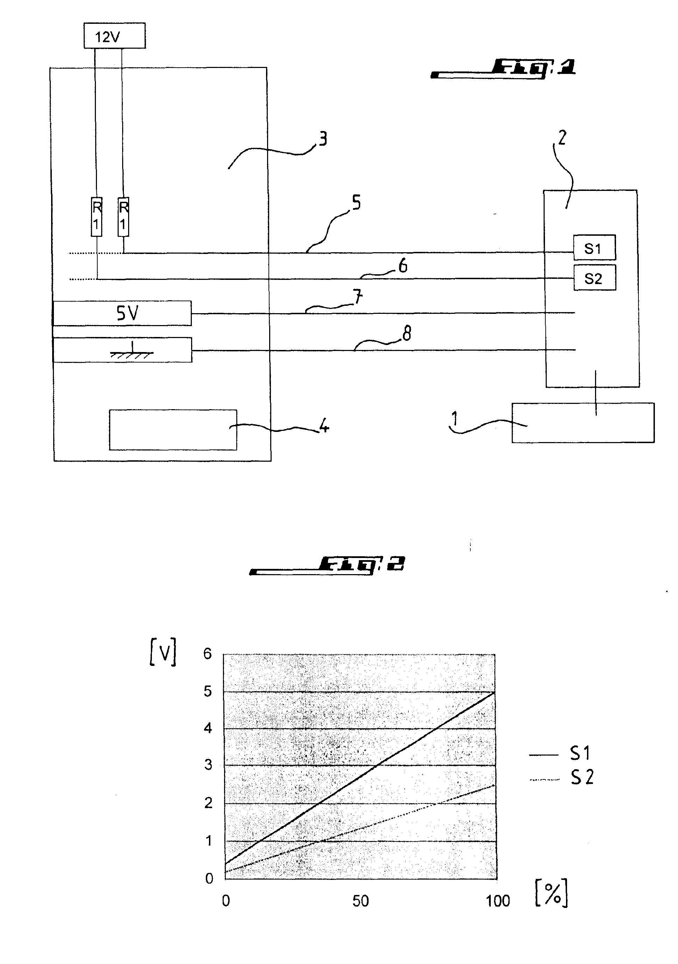

Dans l'interface utilisée avant l'invention, représentée schématiquement sur la figure 1, une pédale de commande 1, par exemple une pédale d'accélérateur d'un véhicule automobile, est reliée à un ensemble de capteurs 2 qui émettent deux signaux électriques S1, S2 sur des fils électriques 5, 6. L'ensemble de capteurs est alimenté via des fils électriques 7 et 8, par une tension d'alimentation 5 volts et une connexion de masse fournies par un calculateur moteur 3. Le calculateur moteur 3 fait l'acquisition des signaux S1, S2 par un circuit de type pull-up et compare les deux valeurs respectives.

Si les interprétations de ces valeurs diffèrent d'un certain pourcentage, ceci est considéré comme détection de la présence d'un défaut et entraîne que le calculateur 4 entre dans un mode dégradé. Des courts-circuits éventuels entre une des voies de signal et le fil d'alimentation 7 ou le fil de masse 8 sont détectés par la présence de zones de diagnostic en dessous de 0,2 volt et au-dessus de 4,8 volts. La forme des signaux en tension S1 et S2 en fonction du degré d'enfoncement de la pédale de commande est représentée sur la figure 2. Selon cette interprétation de l'information électrique, l'augmentation de la tension des signaux est directement proportionnelle au degré d'enfoncement de la pédale de commande.

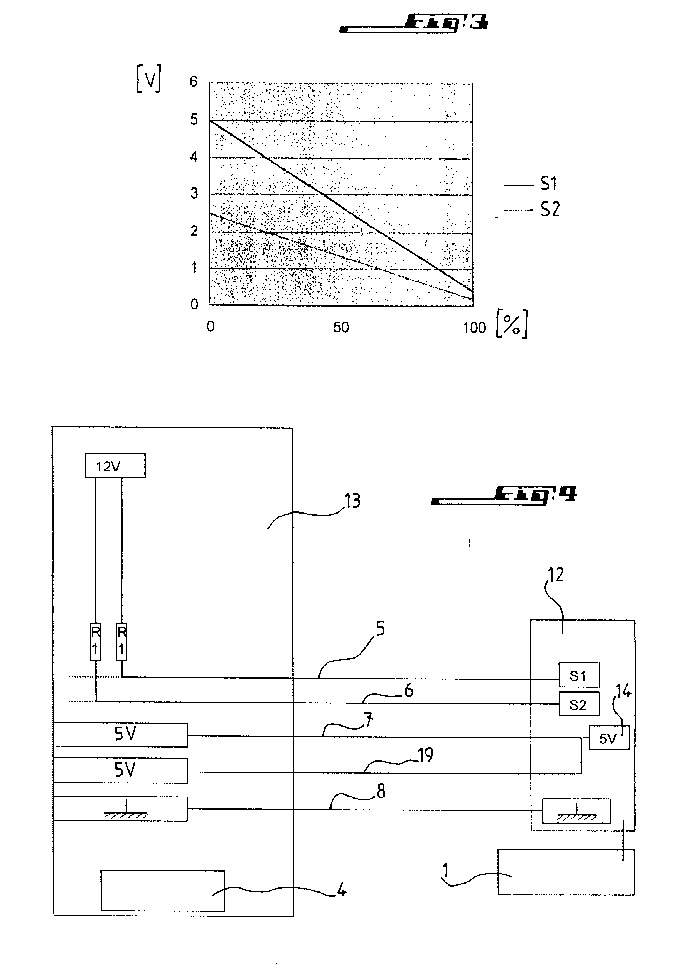

Contrairement à cette interprétation ancienne, l'interprétation de l'information électrique par l'interface électronique de l'invention, telle que représentée sur la figure 3, est redéfinie de telle sorte qu'une augmentation des tensions constituant l'information électrique soit interprétée comme une réduction du degré d'enfoncement de la pédale.

Ainsi, comme le montre la figure 4, une interface électronique selon l'invention reprend la structure de l'interface ancienne dans la mesure où une pédale de commande 1, est reliée à un ensemble de capteurs 12 qui émettent deux signaux électriques S1, S2 sur des fils électriques 5, 6. L'ensemble de capteurs est alimenté via des fils électriques 7 et 8, par une tension d'alimentation 5 volts et une connexion de masse fournies par un calculateur moteur 13. Le calculateur moteur 13 fait l'acquisition des signaux S1, S2 par un circuit de type pull-up et compare les deux valeurs respectives. L'ensemble de capteur comporte en plus une sortie qui fournit sur un fil électrique 19 une relecture de sa tension d'alimentation 5V. Le calculateur 13 effectue une relecture de la tension d'alimentation de l'ensemble de capteurs sur la ligne 19. Il compare cette relecture à la valeur de la tension qu'il fournit en sortie sur la voie 7.

Si cette relecture s'écarte de la valeur de 5V imposée par le régulateur de tension du calculateur alors on détecte une résistance parasite sur cette alimentation. La stratégie de secours appliquée par le calculateur peut alors consister soit à passer en mode dégradé avec inhibition des fonctions critiques (easymove), autrement dit dans un mode sécurisé, soit à recalculer la volonté conducteur en effectuant une correction avec la valeur d'alimentation relue.

Comme la description comparative ci-avant le montre, l'interface électronique de l'invention permet de conserver la même structure que celles qui sont utilisées avant l'invention et de conserver l'ensemble des diagnostics déjà effectués avant l'invention. Tous les avantages en termes de sécurité de l'interface existant sont conservés.

Dans le mode de réalisation préféré décrit ci-dessus, on peut garantir que quelle que soit la combinaison de résistances parasites que l'on applique sur les différentes voies électriques liant la pédale d'accélérateur au calculateur moteur, la valeur d'enfoncement pédale vue par le calculateur ne sera jamais supérieure à la valeur réelle.

L'interface de l'invention permet de garantir que les défaillances d'un connecteur provoquant des résistances parasites sur une ou plusieurs voies simultanément, n'entraînera pas une interprétation erronée de la volonté du conducteur qui serait supérieure à la valeur souhaitée réellement par le conducteur.

## Revendications

1. Interface électronique (2) pour la transmission d'une information (1) impactant la sûreté de fonctionnement d'un véhicule automobile et possédant une valeur de repli, l'interface (2) étant conformée pour recevoir au moins un signal électrique S dont l'amplitude est représentative de l'information (1), **caractérisée en ce que** l'interface (2) est conformée pour que la perturbation du signal électrique S par la présence d'une résistance parasite sur la voie par laquelle transite le signal S soit interprétée comme une variation de l'information (1) vers sa valeur de repli.

2. Interface électronique selon la revendication 1 dans laquelle ladite information (1) correspond au degré d'enfoncement d'une pédale de commande et la valeur de repli est la position non enfoncée de la pédale.

3. Interface électronique (2) selon la revendication 1 ou 2, **caractérisée en ce que** l'information (1) est transmise de façon redondante par au moins deux signaux distincts S1, S2, l'interface comportant des moyens pour détecter une information électrique défaillante par comparaison des deux signaux S1, S2.

4. Interface électronique (2) selon la revendication 3, **caractérisée en ce** les signaux S1, S2 ont des amplitudes multiples les uns des autres et en ce que la valeur de repli des signaux S 1 et S2 correspond à une amplitude minimale.

5. Interface électronique selon la revendication 3 ou 4, **caractérisée en ce qu'**elle comprend un comparateur des signaux S1, S2 et un moyen pour engendrer un signal de commande sur la base des signaux S1, S2 et de leur comparaison.

6. Interface électronique selon la revendication 5, **caractérisée en ce que** ledit signal de commande sur la base des signaux S1, S2 force un mode de fonctionnement dégradé sécurisé.

7. Interface électronique selon l'une des revendications précédentes, **caractérisée en ce qu'**elle comporte de plus un moyen de lecture de la tension d'alimentation effective des capteurs associés à l'acquisition de l'information (1) qui génèrent les signaux électriques et des moyens de comparaison entre la tension d'alimentation nominale et de la tension d'alimentation effective.

8. Interface électronique selon la revendication 5, **caractérisée en ce qu'**elle comporte des moyens de recalcul des signaux S1 et S2 corrigeant l'écart entre la tension nominale et la tension effective.

9. Interface électronique selon l'une des revendications précédentes **caractérisée en ce que** les signaux S1 et S2 soient des tensions proportionnelles à l'information (1), et **en ce que** la lecture de ces tensions soit effectuée par une interface comportant au moins une résistance reliant le signal lu à une source de tension (montage de type pull-up).

10. Véhicule automobile, **caractérisé en ce qu'**il comprend une interface électronique selon l'une quelconque des revendications 1 à 9.
